(19) Europäisches Patentamt

European Patent Office

Office européen des brevets

(11) Veröffentlichungsnummer: **0 230 558 B1**

(12) **EUROPÄISCHE PATENTSCHRIFT**

(45) Veröffentlichungstag der Patentschrift: **20.05.92**

(51) Int. Cl.⁵: **G11B 23/023**, G11B 33/04

(21) Anmeldenummer: **86116545.4**

(22) Anmeldetag: **28.11.86**

---

(54) **Aufbewahrungsbehälter für einen Aufzeichnungsträger.**

---

(30) Priorität: **13.12.85 DE 3544055**

(43) Veröffentlichungstag der Anmeldung:
**05.08.87 Patentblatt 87/32**

(45) Bekanntmachung des Hinweises auf die
Patenterteilung:
**20.05.92 Patentblatt 92/21**

(84) Benannte Vertragsstaaten:
**DE ES FR GB IT SE**

(56) Entgegenhaltungen:
**EP-A- 0 141 112**
**GB-A- 2 011 354**
**US-A- 4 231 625**

(73) Patentinhaber: **idn inventions and development of novelties ag**
**Hartbertstrasse 9**
**CH-7002 Chur(CH)**

(72) Erfinder: **Ackeret, Peter**
**Allmendstrasse 18**
**CH-8700 Küsnacht(CH)**

(74) Vertreter: **Sparing Röhl Henseler Patentanwälte European Patent Attorneys**
**Rethelstrasse 123**
**W-4000 Düsseldorf 1(DE)**

**Beschreibung**

Die Erfindung betrifft einen Aufbewahrungsbehälter für Aufzeichnungsträger, etwa Magnetbandkassetten oder Video- oder Audioplatten, beispielsweise Compactdiscs, zum Einbau in Kraftfahrzeuge, umfassend eine Gehäusebaugruppe mit einer Mehrzahl von Haltern für mindestens einen Aufzeichnungsträger, mittels denen die Aufzeichnungsträger aus der Gehäusebaugruppe in eine bequeme Entnahmeposition transportierbar sind und die je eine Frontwand zum Abdecken der Aufbewahrungsräume der Gehäusebaugruppe aufweisen.

Bei Verwendung derartiger Aufbewahrungsbehälter in Kraftfahrzeugen erfolgt die Bedienung auch während der Fahrt. Wenn aber bei Dunkelheit das Suchen nach einem Halter zum Entnehmen oder Einlegen eines Aufzeichnungsträgers erfolgt, kann dies zu gefährlichen Situationen führen, da der Fahrer hierdurch möglicherweise auch länger abgelenkt wird.

Die EP-A-132 533 offenbart einen Aufbewahrungsbehälter für Aufzeichnungsträger zum Einbau in Kraftfahrzeuge, der eine Gehäusebaugruppe mit einer Mehrzahl von Haltern für mindestens einen Aufzeichnungsträger aufweist, mittels denen die Aufzeichnungsträger aus der Gehäusebaugruppe in eine Entnahmeposition transportierbar sind. Solche Halter weisen eine Frontwand zum Abdecken der Aufbewahrungsräume der Gehäusebaugruppe auf. Der Aufbewahrungsbehälter ist mit einem elektrischen Anschluß an das Kraftfahrzeug-Bordnetz zur Versorgung einer Lichtquellenanordnung versehen, mittels der die Frontwand jedes Halters von einem von außen sichtbaren Lichtband umrahmt wird.

Aufgabe der Erfindung ist es daher, einen Aufbewahrungsbehälter der im Oberbegriff des Anspruchs 1 genannten Art zu schaffen, der es ermöglicht, auch bei Dunkelheit den Aufbewahrungsbehälter zu betätigen, ohne daß hierzu längere Zeit die Aufmerksamkeit in Anspruch genommen wird.

Diese Aufgabe wird dadurch gelöst, daß in der Gehäusebaugruppe für jeden Halter ein Lichtleiter so angeordnet ist, daß sein Lichtspeiseausgang dem Lichtspeiseeingang eines entsprechenden Lichtleiters im Halter gegenüberliegt und eine Lichtübertragungsverbindung zwischen beiden Lichtleitern besteht, wenn der Halter in die Gehäusebaugruppe eingeschoben ist.

Hierbei ist es insbesondere auch möglich, die Beleuchtung der Halter dazu zu verwenden, die Belegung oder Nichtbelegung eines Halters durch einen Aufzeichnungsträger anzuzeigen, so daß die Aufmerksamkeit des Fahrers auch nicht durch das Suchen etwa nach einem freien Halter zum Einlegen eines abgespielten Aufzeichnungsträgers abgelenkt wird.

Die Erfindung wird nachstehend anhand der in den beigefügten Abbildungen dargestellten Ausführungsbeispiele näher erläutert.

Fig. 1 zeigt perspektivisch einen Aufbewahrungsbehälter für Platten.

Fig. 2 zeigt teilweise schematisch einen Aufbewahrungsbehälter für Platten in Seitenansicht.

Fig. 3 zeigt eine rückwärtige Ansicht des Aufbewahrungsbehälters.

Fig. 4 zeigt hälftig einen Schnitt entsprechend der Linie IV-IV von Fig. 3.

Fig. 5 zeigt einen Schnitt längs der Linie V-V von Fig. 4.

Fig. 6 zeigt einen Schnitt längs der Linie VI-VI von Fig. 4.

Fig. 7 zeigt einen Schnitt längs der Linie VII-VII von Fig. 4.

Fig. 8 zeigt einen Ausschnitt entsprechend dem Schnitt IV-IV bei eingeschobenem Halter.

Fig. 9 zeigt einen Ausschnitt entsprechend dem Schnitt IV-IV bei ausgeschobenem Halter.

Fig. 10 zeigt einen Schnitt längs der Linie X-X von Fig. 8.

Fig. 11 zeigt einen Schnitt entsprechend dem Schnitt gemäß der Linie IV-IV einer weiteren Ausführungsform eines Aufbewahrungsbehälters für Platten.

Fig. 12 zeigt einen Schnitt längs der Linie XII-XII von Fig. 11.

Fig. 13 zeigt ein Detail der Ausführungsform von Fig. 11.

Fig. 14a und 14b zeigen zwei Ausführungsformen von Adaptern für den Aufbewahrungsbehälter im Schnitt.

Fig. 15 und 16 zeigen ausschnittweise und in zwei zueinander senkrechten Schnitten einen Aufbewahrungsbehälter für Magnetbandkassetten.

Fig. 17 zeigt schematisch im Schnitt eine Ausführungsform mit seitlicher Lichtzuführung zu dem Halter.

Fig. 18 bis 20 zeigen eine weitere Ausführungsform mit seitlicher Lichtzuführung zu den Haltern.

Fig. 21 zeigt schematisch eine Ausführungsform mit beleuchteter Taste im Schnitt.

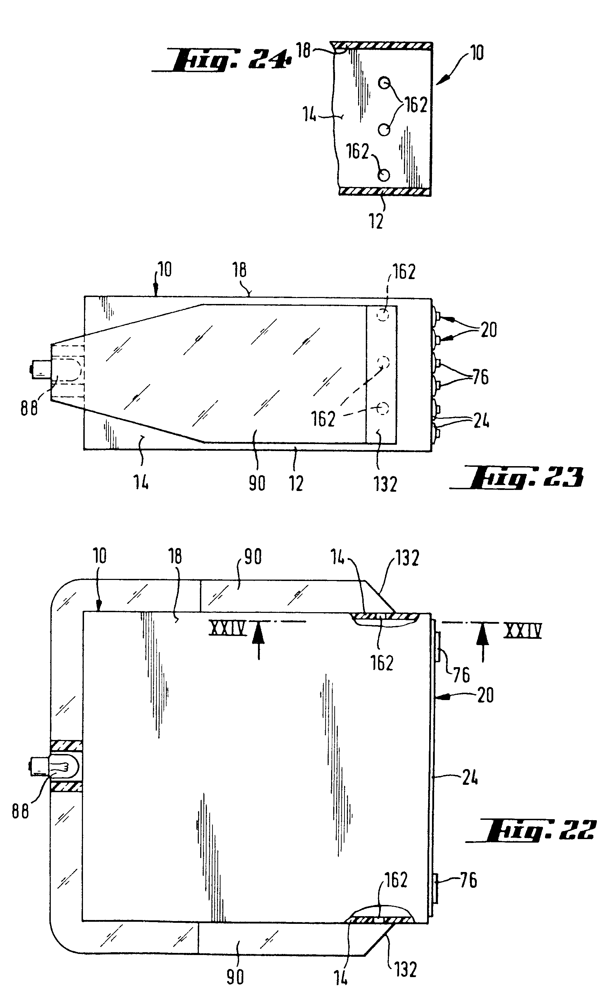

Fig. 22 bis 24 zeigen schematisch eine Ausführungsform der seitlichen Lichteinführung.

Fig. 25 und 26 zeigen schematisch eine weitere Ausführungsform der seitlichen Lichtzuführung.

Fig. 27 und 28 zeigen schematisch eine zusätzliche Möglichkeit der seitlichen Lichtzuführung.

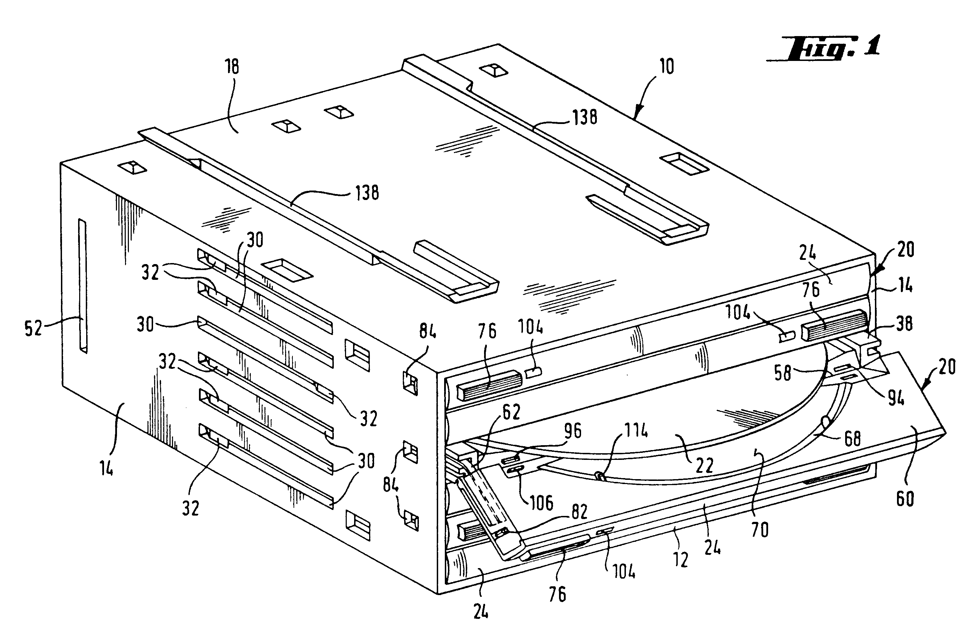

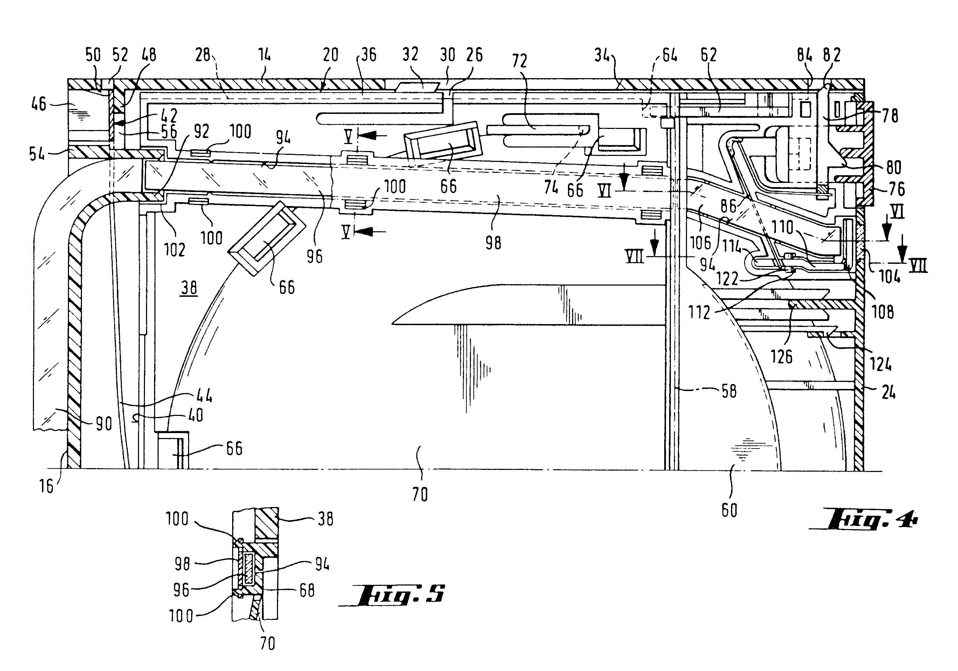

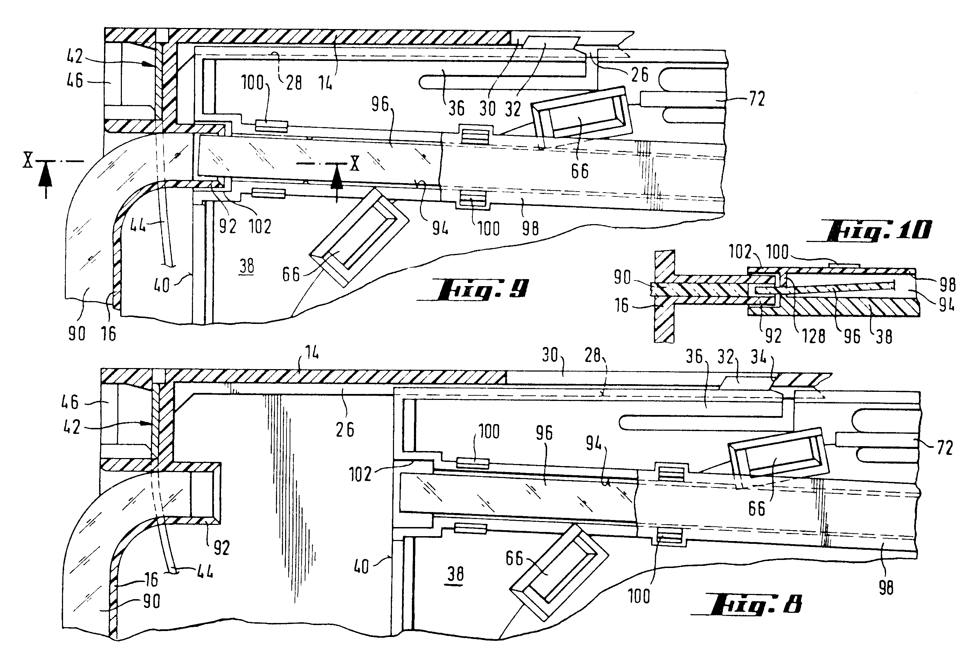

Der Aufbewahrungsbehälter der Ausführungsform der Fig. 1 bis 10 umfaßt ein im wesentlichen quaderförmiges Gehäuse 10 mit einem Boden 12, Seitenwänden 14, einer Rückwand 16 und einer Deckwand 18, während es frontseitig offen ist. Das Gehäuse 10 nimmt eine Reihe von Haltern 20 für jeweils einen Aufzeichnungsträger 22, beim darge-

stellten Ausführungsbeispiel eine Aufzeichnungs-platte, eine sogenannte Compact-Disc, auf. Die Halter 20 sind mit einer Frontwand 24 versehen, wobei die Frontwände 24 der vom Gehäuse 10 aufgenommenen Halter 20 das Gehäuse 10 frontseitig verschließen.

Die Halter 20 sind um eine vorbestimmte Strecke teilweise aus dem Gehäuse 10 einzeln ausschiebbar, zu welchem Zweck die Seitenwände 14 des Gehäuses 10 innenseitig Führungsrippen 26 aufweisen, während die Halter 20 entsprechende seitliche Nuten 28 zum Eingriff mit den Führungsrippen 26 besitzen. In Höhe jedes Halters 20 weisen die Seitenwände 14 außerdem Schlitze 30 auf, die sich in Richtung der Ausschubbewegung der Halter 20 erstrecken und in die Anschlaghaken 32 an den Haltern 20 greifen, welche den Ausschubweg durch Auflaufen auf jeweils eine Anschlagkante 34 der Schlitze 30 begrenzen. Die Anschlaghaken 32 sind über einstückig damit ausgebildete Federzungen 36 jeweils mit einer Aufnahmeplatte 38 des jeweiligen Halters 20 verbunden, so daß sie beim erstmaligen Einschieben des Halters 20 nach innen ausfedern können.

Jeder Halter 20 besitzt eine der Frontwand 24 abgekehrte rückwärtige Kante 40, auf die eine blattförmige Auswerffeder 42 einwirkt, deren Zunge 44 den Halter 20 in Entnahmeposition vorspannt. Hierbei können insbesondere zwei kammartig ausgebildete Auswerffedern 42 vorgesehen sein, deren Zungen 44 sich abwechselnd von gegenüberliegenden Seiten einwärts erstrecken und jeweils einen Halter 20 beaufschlagen. Diese Auswerffedern 42 können zweckmäßigerweise durch eine Einführöffnung 46 an der Rückseite des Gehäuses 10 durch einen entsprechenden Schlitz eingeführt und zwischen einem zur Rückwand 16 parallelen Steg 48 und einem Anschlag 50, der sich benachbart zu einem Schlitz 52 in der Seitenwand 14 befindet, damit er ausfedern kann, angeordnet sein. Ein Steg 54 parallel zur Seitenwand 14, der mit dieser die Einführöffnung 46 begrenzt, dient zusammen mit einer hinter den Steg 54 abgewinkelten Rippe 56 zum weiteren Festlegen der Auswerffeder 42, damit diese nicht ins Gehäuse 10 fallen kann. Der Schlitz 52 erstreckt sich über weniger als die volle Höhe der Auswerffeder 42, damit diese nicht durch den Schlitz 52 aus dem Gehäuse 10 gelangen kann.

An der Aufnahmeplatte 38 des Halters 20 befindet sich frontseitig über ein Filmgelenk 58 damit verbunden eine Klappe 60. Das Filmgelenk 58 ermöglicht eine relative Schwenkbewegung der Klappe 60 gegenüber der Aufnahmeplatte 38, wobei der Winkel einerseits durch das Aneinanderstoßen der einander gegenüberliegenden Kanten der Aufnahmeplatte 38 und der Klappe 60 und andererseits durch das Anstoßen von mindestens einer Blattfeder 62 an Enden von entsprechenden Aufnahmeschlitzen 64 hierfür in der Aufnahmeplatte 38 und in der Klappe 60 begrenzt sein kann. In der nicht abgeklappten Endlage bildet die Klappe 60 eine Verlängerung der Aufnahmeplatte 38, in der der gesamte Halter 20 in das Gehäuse 10 einschiebbar ist. In der anderen Endlage - nur in dieser ist der Anschlag der Blattfeder 62 wirksam, welche die Klappe 60 in die abgeklappte Position vorspannt - ist die Klappe 60 und damit ihre Frontwand 24 soweit abgeklappt, daß die Platte 22 ohne Behinderung in den Halter 20 einlegbar bzw. aus diesem entnehmbar ist, wobei die Aufnahmeplatte 38 soweit aus dem Gehäuse 10 ausgeschoben ist, daß ihr über die Frontseite des Gehäuses 10 vorstehender Abschnitt eine Leitfläche für das Einlegen der Platte 22 bildet.

An der Aufnahmeplatte 38 des Halters 20, der die lichte Breite des Gehäuses 10 überspannt, können auf der zur Aufnahme einer Platte 22 bestimmten Oberseite mehrere Niederhalter 66 angeformt sein, deren der offenen Front des Gehäuses 10 zugekehrte Kante abgeschrägt ist und die den Außenumfang einer eingelegten Platte 22 übergreifen. Die Aufnahme der Aufnahmeplatte 38 wird durch eine ringförmige gegenüber der Oberseite vertiefte Auflagefläche 68 für den Rand der Platte 22 gebildet, die sich auf der Klappe 60 fortsetzt und aus Kratzschutzgründen eine etwa wannenförmige Eintiefung 70 begrenzen kann. Im Bereich der Auflagefläche 68 kann die Auflageplatte 38 gegebenenfalls damit einstückig ausgebildete, federnd auslenkbare zungenartige Einzugsarme 72 aufweisen, deren freie Enden einen nach oben abwinkelten und nach innen umgelegten Abschnitt 74 aufweisen. Die Einzugsarme 72 legen sich mit dem abgewinkelten Abschnitt 74 seitlich an die Platte 22 an, wenn diese in den Halter 20 eingeschoben wird bzw. ist. Hierdurch wird beim Ausschub des Halters 20 aus dem Gehäuse 10 unter der Wirkung der Auswerffeder 42 die Platte 22 gebremst, so daß sie nicht herauskatapultiert wird. Außerdem werden hierdurch Vibrationen der Platte 22 etwa bei Verwendung des Behälters in einem Kraftfahrzeug gedämpft. Beim Einschieben der Platte 22 sorgen die Einzugsarme 72 ferner dafür, daß die Platte 22 zuverlässig bis in ihre Endlage gelangt, so daß dann auch die Klappe 60 hochgeklappt werden kann. Der Benutzer spürt die Überwindung der Bremskraft der Einzugsarme 72 deutlich, so daß er gewiß sein kann, daß die Platte 22 sicher verstaut ist. Die einwärts abgekröpften Enden der Abschnitte 74 übergreifen dabei die Platte 22 und stellen sicher, daß die Einzugsarme 72 nicht unter die Platte 22 geraten können.

Um die Halter 20 im eingeschobenem Zustand im Gehäuse 10 zu halten, ist eine Verriegelungsanordnung vorgesehen, die beim dargestellten Ausführungsbeispiel jeweils aus einer Taste 76 besteht, die in der frontwand 24 angeordnet und gegenüber dieser in der Ebene der Aufnahmeplatte 38 eindrückbar ist, wobei sie auf einen Riegelschieber 78, und zwar auf dessen Keilfortsatz 80 einwirkt, wodurch dessen Riegelfortsatz 82 aus einer Falle 84 in der Seitenwand 14 entgegen der Kraft einer Rückstellfeder 86 herausbeweglich ist. Die Rückstellfeder 86 greift am freien Ende des Riegelschiebers 78 an. Beim Wiedereinschub fällt der Riegelfortsatz 82 automatisch in die Falle 84. Damit die Tasten 76 besser betätigbar sind, sind diese abwechselnd auf der einen und der anderen Seite des Gehäuses 10 angeordnet.

Auf der Rückseite 16 des Gehäuse 10 ist eine elektrische Lichtquelle 88, etwa eine Glühbirne, vorgesehen, die im Zentrum einer Reihe von hiervon ausgehenden Lichtleitern 90 angeordnet ist. Die Lichtleiter 90, die in einer Anzahl entsprechend der Anzahl der vorgesehenen Halter 20 des Behälters vorhanden sind, erstrecken sich spinnenartig von der Lichtquelle 88 auswärts zu den seitlichen Bereichen der Rückwand 16 in die jeweilige Höhe des zugehörigen Halters 20 und dort durch die Rückwand 16 in den Behälter hinein. An der Rückwand 16 sind sich einwärts in das Gehäuse 10 erstreckende Stutzen 92 mit rechteckigem Querschnitt entsprechend dem Querschnitt der Lichtleiter 90 angeformt. Die Lichtleiter 90 enden ein Stück vor dem freien Ende der Stutzen 92 in diesen. Die Stutzen 92 befinden sich benachbart zu den freien Enden der Zungen 44 der Auswerffedern 42. Die Halter 20 besitzen unterseitig eine sich zur Frontwand 24 hin erstreckende Rinne 94 zur Aufnahme eines Lichtleiters 96 mit gleichem Querschnitt wie der Lichtleiter 90, die mittels einer Deckleiste 98 zur Unterseite des Halters 20 hin verschlossen ist. Die Deckleiste 98 ist beispielsweise über Verschnappungen 100 mit der Aufnahmeplatte 38 verbunden. Benachbart zum Stutzen 92 besitzt die Aufnahmeplatte 38 eine den Stutzen 92 teilweise umgreifende Ausnehmung 102, in der der Lichtleiter 96 mündet, so daß im eingeschobenen Zustand des Halters 20 der Lichtleiter 96 in den Stutzen 92 ragt und mit seiner Stirnseite der benachbarten Stirnseite des Lichtleiters 90 gegenüberliegt, so daß eine Lichtschleuse gebildet wird, die zudem das Austreten von Streulicht verhindert.

Die Rinne 94 setzt sich in die Klappe 60 fort, wobei das Filmgelenk 58 entsprechend unterbrochen ist, und endet vor der Frontwand 24 benachbart zu einem in der Frontwand 24 angeordnetem Fenster 104, das seinerseits benachbart zur Taste 76 angeordnet ist. Die Rinne 94 nimmt in der Klappe 60 ebenfalls einen Lichtleiter 106 mit dem gleichen Querschnitt wie die Lichtleiter 90, 96 auf. Zwischen dem frontwandseitigen Ende des Lichtleiters 106 und dem Fenster 104 ist ein Anzeige- oder Modulationsorgan 108 etwa in Form einer Signalflagge angeordnet, das an einem Ende eines Schwenkhebels 110 angeordnet ist, der im mittleren Bereich in einem Lager 112 mit offenen Lagerpfannen in der Klappe 60 gelagert ist. Das Anzeigeorgan 108 kann zwei transparente Abschnitte mit unterschiedlicher Farbe oder einen transparenten oder ausgesparten und einen nicht transparenten Abschnitt aufweisen, die entsprechend der Belegung oder Nichtbelegung des Halters 20 vor dem Fenster 104 erscheinen und eine entsprechende Leuchtanzeige liefern. Das freie Ende 114 des Schwenkhebels 110, das als Taster dient, ragt in den Auflagebereich 68 der Platte 22 auf dem Halter 20, so daß durch Einlegen einer Platte 22 der Schwenkhebel 110 niedergedrückt und das Anzeigeorgan 108 entsprechend verschwenkt wird. Die Rückstellung erfolgt über eine Rückstellfeder, hier die Rückstellfeder 86, die mit ihrem zweiten freien Ende zwischen dem Lager 112 und dem freien Ende 114 des Schwenkhebels 110 angreift, während ihr Mittelabschnitt in der Klappe 60 festgelegt ist.

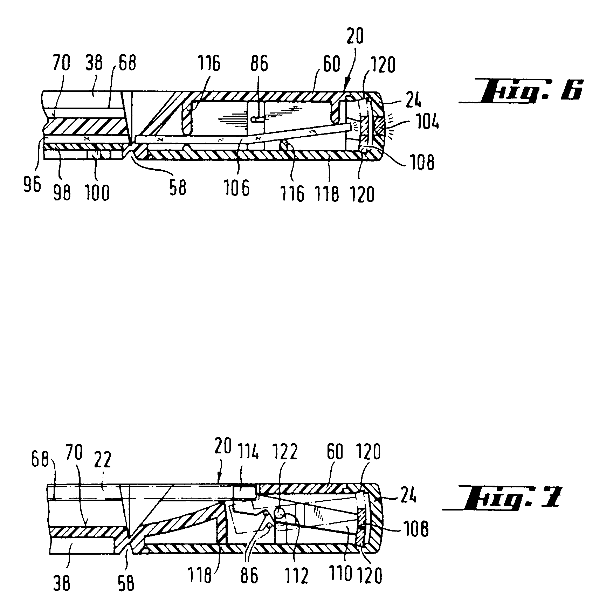

Wie aus Fig. 6 ersichtlich ist, wird der Lichtleiter 106 in der Klappe 60 durch Rippen 116 der Klappe 60 bzw. einer die Frontwand 24 bildenden Abdeckung 118 für die Klappe 60 abgestützt. Für das Modulierorgan 108 sind ein oberer und ein unterer Anschlag 120 in der Abdeckung 118 für die beiden vorgesehenen Anzeigepositionen angeordnet. Das Lager 112 ist so gestaltet, daß nach halbem Weg des Tasters 114 das Modulierorgan 108 bereits mit dem entsprechenden Anschlag 120 in Eingriff steht, wodurch die Bolzen 122 des Schwenkarms 110 aus den Lagerpfannen gedrückt werden, so daß die zweite Hälfte des Tasterweges Toleranzfeld ist. In der Leerstellung hält die Rückstellfeder 86 das Modulierorgan 108 in den Lagerpfannen (Fig. 7).

Die Abdeckung 118 reicht von der Oberseite der Klappe 60 bis auf deren Unterseite und deckt die Verriegelungs- und die Leuchtanzeigeeinrichtung ab, wobei sie durch Schnappverbindungen 124 mit der Klappe 60 verbunden und mittels Frontzentrierungen 126 zentriert angebracht ist.

Der Halter 20 kann insbesondere spiegelsymmetrisch zur Mittelebene in Ausschubrichtung und senkrecht zur Darstellungsebene von Fig. 4 ausgebildet sein, so daß die Taste 76, der Riegelschieber 78, die Aufnahmeplatte 38, die Klappe 60, das Fenster 104, die Lichtleiter 96, 106, die Rückstellfeder 86 und die Deckleiste 98 sowohl rechts- als auch linksseitig verwendet werden können.

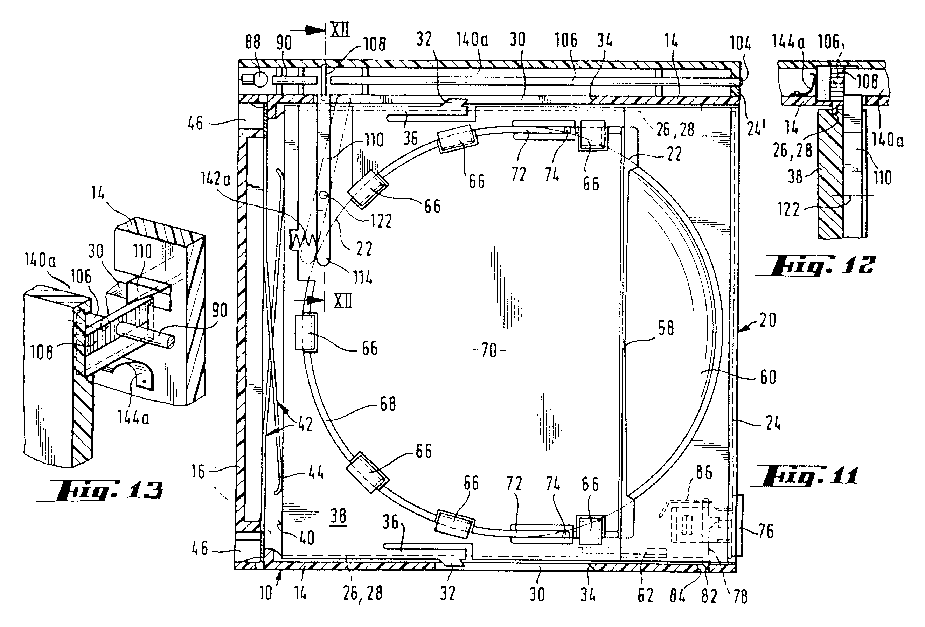

Wie aus Fig. 10 ersichtlich, wird die Ausnehmung 102 an der Unterseite der Aufnahmeplatte 38 durch die Deckleiste 98 begrenzt, die mit einem Steg 128 versehen ist, der den Lichtleiter 96 in der in den Stutzen 92 einführbaren Position hält.

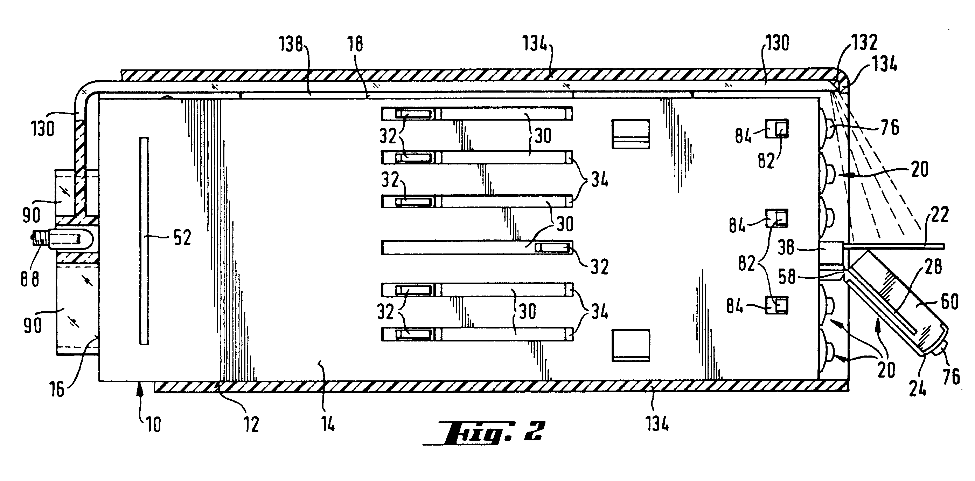

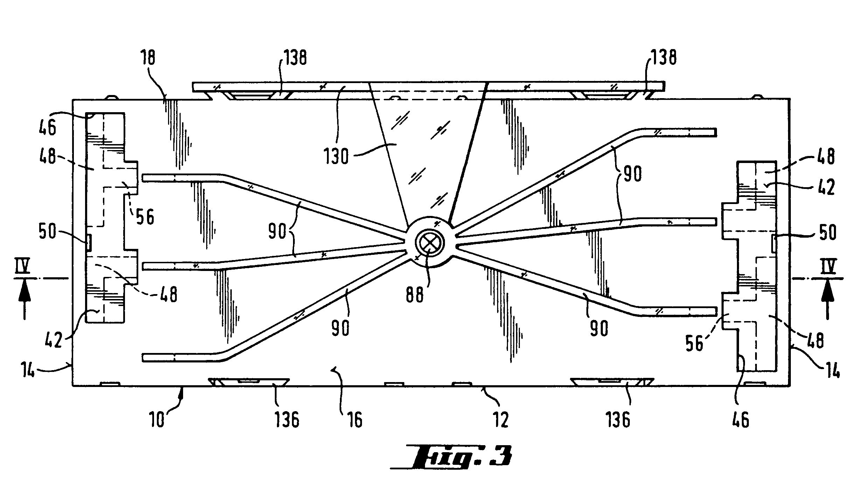

Wie aus Fig. 2 und 3 ersichtlich ist, kann ein weiterer Lichtleiter 130 auf die Deckwand 18 des Gehäuses 12 geführt sein und sich bis kurz über die Frontseite des Gehäuses 10 hinaus erstrecken. Der Lichtleiter 130 besitzt an seiner frontseitigen Kante eine sich von dessen Oberseite zu seiner Unterseite erstreckende Abschrägung 132, die Licht infolge Reflexion an dieser Abschrägung 132 auf den frontseitigen Bereich des Behälters richtet. Eine Blende 134 gegen Streulicht, die den Behälter zumindestens frontseitig umfassen kann, kann den Lichtleiter 130 frontseitig und oberseitig überdeckend vorgesehen sein.

Das Gehäuse 10 kann ober- und unterseitig mit korrespondierenden Nuten 136 und Federn 138 zum Verbinden von übereinander gestapelten Behältern versehen sein.

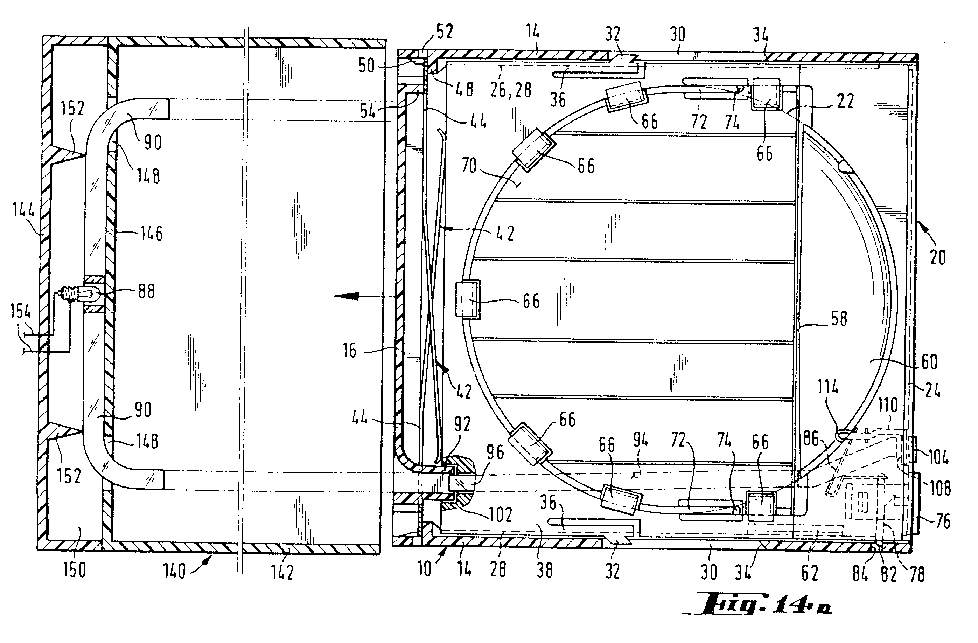

Bei der in den Fig. 11 bis 13 dargestellten Ausführungsform besitzt das Gehäuse 10 seitliche Kanäle 140a, die den jeweiligen Haltern 20 zugeordnet sind. Von der Lichtquelle 88 erstecken sich Lichtleiter 90 in die Kanäle 140a. Im gehäuseinneren Bereich der Aufnahmeplatte 38 ist benachbart zu dem entsprechenden Kanal 140a der Schwenkhebel 110 in seinem mittleren Bereich drehbar gelagert, wobei sein als Taster dienendes freies Ende 114 unter Einwirkung einer Druckfeder 142a in den Auflagebereich 68 der Platte 22 ragt. Das andere freie, etwa im Schnitt dreieckige Ende des Schwenkhebels 110 ragt durch eine Öffnung in der Seitenwand 14 in den Kanal 140a und steht dort mit einer Signalflagge 108 in Eingriff, die mittels einer Feder 144a gegen den Schwenkhebel 110 verschiebbar vorgespannt ist. Der Lichtleiter 90 endet benachbart zu einer Seite der Signalflagge 108, während sich von der anderen Seite bis in das Fenster 104 an dem Frontwandabschnitt 24' des Gehäuses 10 der Lichtleiter 106 erstreckt. Die Signalflagge 108 besitzt in dem dargestellten Ausführungsbeispiel zwei übereinander angeordnete transparente Abschnitte unterschiedlicher Färbung. Wird eine Platte 22 eingelegt und der Halter 20 in das Gehäuse 10 eingeschoben, drückt die Platte 22 auf den Taster 114, wodurch der Schwenkhebel 110 die Signalflagge 108 freigibt, so daß diese unter der Wirkung der Feder 144a verschoben wird, so daß eine andere Farbe im Fenster 104 als bei leerem Halter 20 erscheint.

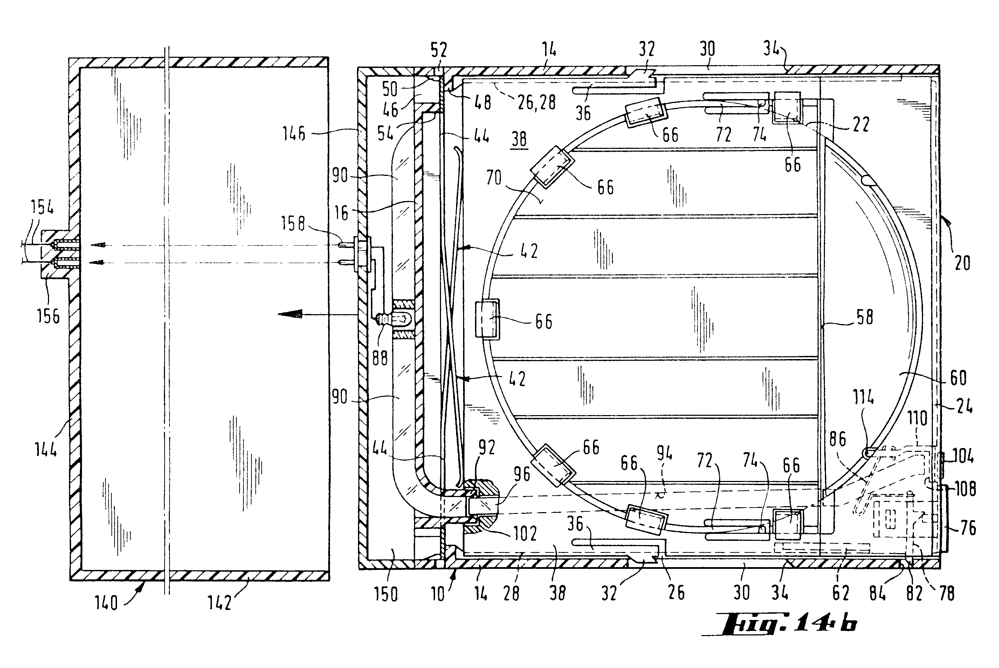

Gemäß Fig. 14a ist ein Adapter 140 vorgesehen, der ein im wesentliches quaderförmiges, frontseitig offenes Gehäuse 142 umfaßt, in das das Gehäuse 10 paßt und einschiebbar ist. Mit Abstand zur Rückseite 144 des Gehäuses 142 ist eine parallel hierzu verlaufende Zwischenwand 146 angeordnet, die den Aufnahmebereich für das Gehäuse 10 begrenzt und mit Durchbrüchen 148 für die Lichtleiter 90 versehen ist, die in dem Zwischenraum 150 zwischen der Rückwand 144 und der Zwischenwand 146 in Anlage an letztere durch entsprechende Vorsprünge 152 an der Innenseite der Rückwand 144 gedrückt angeordnet sind. Hierbei gehen die Lichtleiter 90 spinnenartig von der Lichtquelle 88, die ebenfalls in dem Zwischenraum 150 angeordnet ist, aus, und zwar entsprechend der aus Fig. 3 ersichtlichen Anordnung, so daß beim Einschieben des Gehäuses 10 in den Adapter 140 die Lichtleiter 90 in die Stutzen 92 des Gehäuses 10 gelangen. Elektrische Zuleitungen 154 zu der Lichtquelle 88 sind aus dem Zwischenraum 150 nach außen zum Anschluß an eine Stromquelle herausgeführt.

Bei der in Fig. 14b dargestellten Ausführungsform ist das im wesentlichen quaderförmige, frontseitig offene Gehäuse 142 des Adapters 140 an der Rückwand 144 mit einer Doppelsteckerbuchse 156 versehen, während das Gehäuse 10 eine parallel zur Rückwand 16 und mit Abstand hierzu angeordnete zusätzliche Rückwand 146 aufweist, die mit der Rückwand 16 den die Lichtleiter 90 und die Lichtquelle 88 aufnehmenden Zwischenraum 150 begrenzt und in der zwei Stecker 158 angeordnet sind, die beim Einschieben des Gehäuses 10 in den Adapter 140 mit der Doppelsteckerbuchse 156 in Eingriff gelangen. Stattdessen können aber auch die Stecker 158 an der Rückwand 144 und die Doppelsteckerbuchse 156 in der Rückwand 146 angeordnet sein.

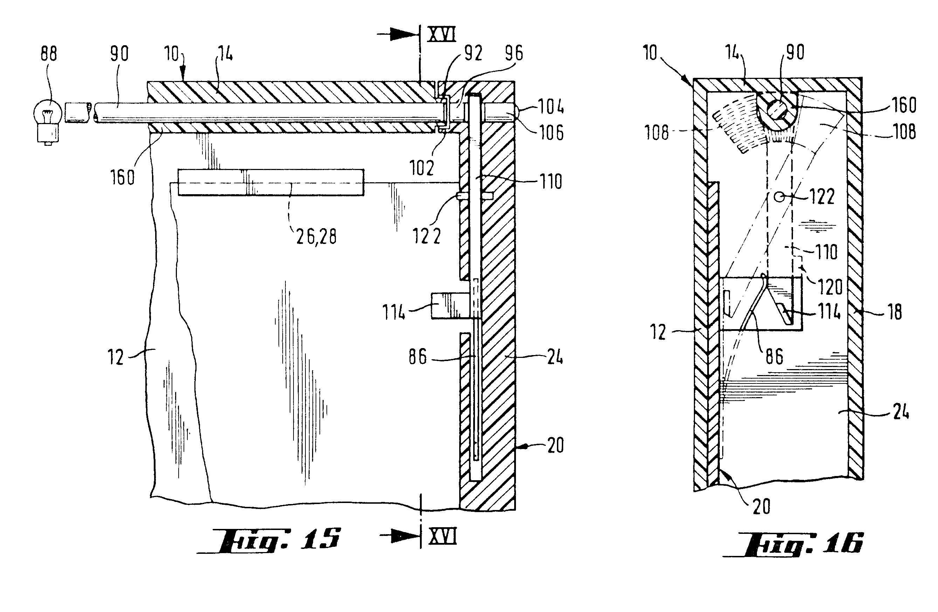

Bei der in den Fig. 15 und 16 dargestellten Ausführungsform ist ein Gehäuse 10 vorgesehen, das einen Halter 20 für eine Magnetbandkassette aufnimmt. Der Boden 12 des Gehäuses 10 besitzt Führungsschlitze 26 für den Halter 20, die sich über eine vorbestimmte Strecke erstrecken und damit den Ausschubhub des Halters 20 unter der Einwirkung der Auswerffeder 42 nach Entriegeln der Verriegelungsanordnung (beides hier nicht dargestellt) begrenzen, so daß der Halter 20 eine darin befindliche Magnetbandkassette in eine Entnahmeposition bringen kann, in der diese seitlich ergriffen und bequem entnommen werden kann. Eine Seitenwand 14 des Gehäuses 10 besitzt eine nach innen gerichtete Rippe 160, die sich von der Rückwand bis zur Vorderkante des Gehäuses 10 erstreckt und eine Bohrung aufweist, die einen Lichtleiter 90 aufnimmt, der an der Rückseite des Gehäuses 10 von der Lichtquelle 88 beleuchtet werden kann. Der Lichtleiter 90 endet in einem Stutzen 92, und zwar kurz vor dessen Ende, während die Frontwand 24 des Halters 20 eine den Stutzen 92 übergreifende Ausnehmung 102 aufweist, von der sich eine Bohrung zur Vorderseite erstreckt, die zwei Lichtleiter 96 und 106 aufnimmt, die mit Abstand zueinander angeordnet sind, damit eine Signalflagge 108 verschwenkbar zwischen diesen angeordnet werden kann. Die Bohrungen in der Rippe 160 und in der Frontwand 24 fluchten miteinander, so daß Licht von der Lichtquelle 88 zum Anzeigefenster 104, in dem der Lichtleiter 106 mündet, übertragen wird. Die Signalflagge 108 besitzt zwei Abschnitte mit unterschiedlicher Färbung, die transparent sind, und ist an einem Schwenkhebel 110 befestigt, der in der Frontwand 24 um Zapfen 122 drehbar gelagert ist und dessen der Signalfahne 108 gegenüberliegendes freies Ende einen Taster 114 trägt. Der Schwenkhebel 110 wird durch eine Feder 86 gegen einen Anschlag 120 gedrückt, so daß ein Abschnitt der Signalfahne 108 in dem Lichtweg zwischen den beiden Lichtleitern 96, 106 angeordnet ist. Durch Einlegen einer Magnetbandkassette wird der Taster 114, der in den Aufnahmeraum des Halters 20 für die Magnetbandkassette ragt, durch letztere in Richtung des Bodens des Halters 20 heruntergedrückt, wodurch der Schwenkhebel 110 um seine Schwenkachse, die parallel zur Richtung der Lichtleiterachsen verläuft, geschwenkt wird, so daß die Signalfahne 108 mit ihrem andersfarbigen Abschnitt zwischen die Lichtleiter 96, 106 geschwenkt wird, so daß im Anzeigefenster 104 eine andere Farbe als bei unbelegtem Halter 20 erscheint, wenn letzterer eingeschoben ist und Licht von der Lichtquelle 88 über die Lichtschleuse 92, 102 zum Anzeigefenster 104 übertragen wird.

Bei der in Fig. 17 schematisch dargestellten Ausführungsform besitzt die Seitenwand 14 des Gehäuses 10 für jeden Halter 20 einen Durchbruch 162, während der Halter 20 einen Lichtleiter 106 aufnimmt, der frontseitig mündet und mit seinem anderen Ende bei in das Gehäuse 10 eingeschobenem Halter 20 dem Durchbruch 162 gegenüberliegt. Über den Durchbruch 162 wird dem Lichtleiter 106 bei eingeschobenem Halter 20 Licht zum Beleuchten der Frontwand des Behälters zugeführt, im dargestellten Falle über einen endseitig mit einer Fassung 164 versehenen und hiermit in den Durchbruch 162 eingesetzten Lichtleiter 90. Hierbei kann der Halter 20 zweckmäßigerweise die Seitenwand 14 frontseitig überdecken und eine äußere Rippe 166 aufweisen, die bei eingeschobenem Halter 20 mit einer entsprechenden seitlichen, äußeren Ausnehmung der Seitenwand 14 in Eingriff steht, damit kein Streulicht über den Spalt zwischen Gehäuse 10 und Halter 20 austritt. Um ein Toleranzfeld zu haben, ist der Einspeiseeingang des Lichtleiters 106 gegenüber dem Durchbruch 162 in Einschubrichtung des Halters 20 länger.

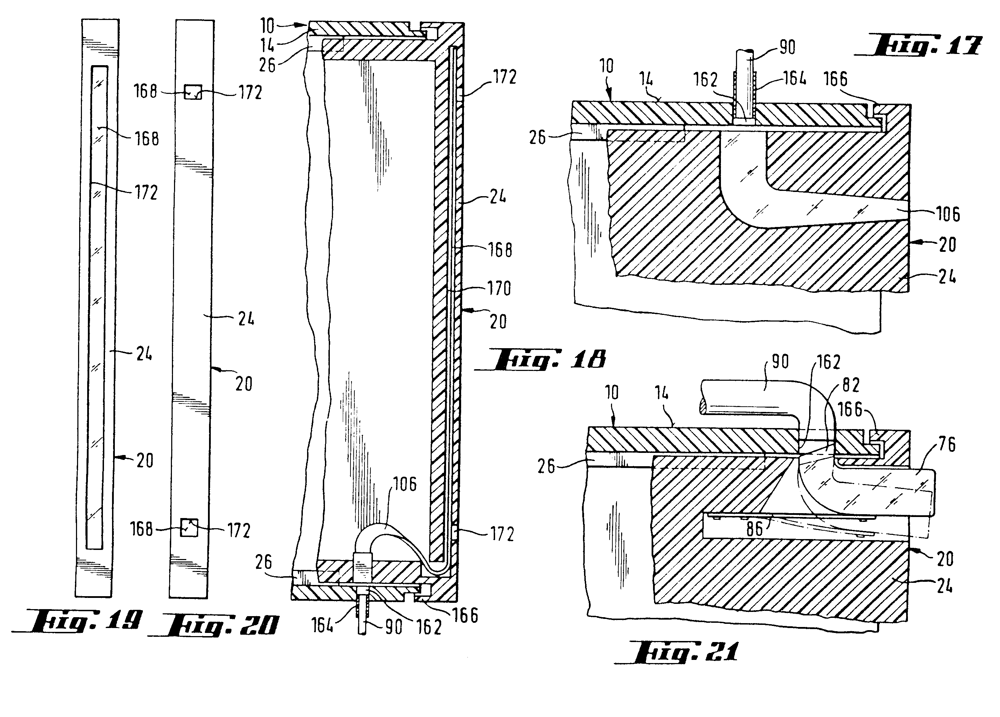

Bei der in den Fig. 18 bis 20 schematisch dargestellten Ausführungsform ist der Lichtleiter 106 als Band ausgebildet, daß sich in einem Lichtband 168 in einem Schlitz 170 benachbart und entlang der Frontwand 24 fortsetzend erstreckt, wobei die rückwärtige Seite des Schlitzes 170 als Reflektor ausgebildet ist. Die Frontwand 24 besitzt entweder Fenster 172 etwa im Bereich der seitlichen Enden (Fig. 20) oder ein durchgehendes Fenster 172 zum Austritt von Licht zur Beleuchtung der Frontwand des Behälters (Fig. 19), wobei das Lichtband 168 im Bereich der Fenster 172 einen Lichtaustritt ermöglicht.

Bei der in Fig. 21 dargestellten Ausführungsform besteht die Taste 76 aus transparentem Material und ist mittels einer blattförmigen Rückstellfeder 86, die am Halter 20 und an der Taste 76 befestigt ist, in Richtung auf die Seitenwand 14 vorgespannt. Die Taste 76 trägt den Riegelfortsatz 82, der einstückig hiermit ausgebildet ist und in den Durchbruch 162 ragt, der hier als Falle dient. Auf diese Weise wird vom Lichtleiter 90 über die Taste 76 Licht zur Front des Behälters geleitet.

Wie aus Fig. 22 ersichtlich, können sich Lichtleiter 90 von der Rückseite des Behälters bis zu den einzelnen Durchbrüchen 162 den Behälter umgreifend erstrecken, wobei im Bereich der Durchbrüche 162 zur Ausbildung einer Reflexionsfläche Abschrägungen 132 vorgesehen sind, die das Licht durch die Durchbrüche 162 ins Innere des Behälters reflektieren. Hierbei können sich einzelne Lichtleiter 90 jeweils zu einem Durchbruch 162 erstrecken oder diese Lichtleiter 90 können jeweils auf einer Seite des Behälters zu einem einzigen zusammengefaßt sein, wie aus Fig. 23 ersichtlich ist.

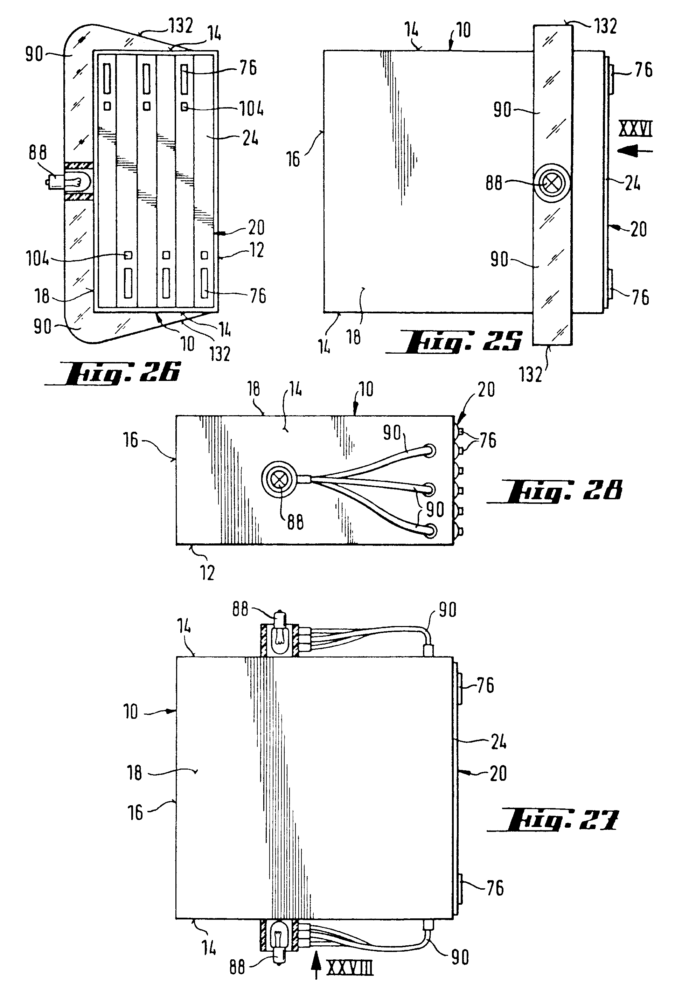

Gemäß Fig. 25 und 26 kann sich jeweils ein Lichtleiter 90 von der Oberseite des Behälters bis über den Bereich der Durchbrüche 162 auf seinen Seiten erstrecken, wobei sich die Abschrägung 132 über den gesamten Bereich der Durchbrüche 162 erstreckt, so daß von einem Lichtleiter 90 Licht durch alle Durchbrüche 162 einer Seite des Behälters in dessen Inneres gelenkt wird (um von dort zur Front geleitet zu werden). Die Lichtquelle 88 kann auf der Oberseite des Behälters angeordnet sein.

Gemäß Fig. 27 und 28 sind auf beiden Seiten des Behälters jeweils eine Lichtquelle 88 und von dieser ausgehende flexible Lichtleiter 90 vorgesehen, die in den Durchbrüchen 162 enden.

Die Abschrägungen 132 können verspiegelt sein.

Als Lichtleiter kommen z.B. faseroptische infrage, insbesondere sind die Lichtleiter aber als Spritzgußteile ausgebildet, insbesondere etwa die Lichtleiterspinne.

## Patentansprüche

1. Aufbewahrungsbehälter für Aufzeichnungsträger (22) zum Einbau in Kraftfahrzeuge, umfassend eine Gehäusebaugruppe (10) mit einer Mehrzahl von Haltern (20) für mindestens einen Aufzeichnungsträger (22), mittels denen die Aufzeichnungsträger (22) aus der Gehäusebaugruppe (10) in eine bequeme Entnahmeposition transportierbar sind und die je eine Frontwand (24) zum Abdecken der Aufbewahrungsräume der Gehäusebaugruppe (10) aufweisen, sowie einen elektrischen Anschluß (154) an das Fahrzeug-Bordnetz zur Versorgung einer Lichtquellenanordnung (88), mittels der mindestens ein Teilbereich der Behälterfront von außen sichtbar beleuchtbar ist, dadurch gekennzeichnet, daß in der Gehäusebaugruppe (10) für jeden Halter (20) ein Lichtleiter (90) so angeordnet ist, daß sein Lichtspeiseausgang dem Lichtspeiseeingang eines entsprechenden Lichtleiters (96) im Halter (20) gegenüberliegt und eine Lichtübertragungsverbindung zwischen beiden Lichtleitern (90, 96) besteht, wenn der Halter in die Gehäusebaugruppe eingeschoben ist.

2. Aufbewahrungsbehälter nach Anspruch 1, dadurch gekennzeichnet, daß eine Lichtquelle (88) für mehr als einen Halter (20) vorgesehen ist, von der Lichtleiter (90, 96) zu den Einspeisungseingängen der Halter (20) führen.

3. Aufbewahrungsbehälter nach Anspruch 1 oder 2, dadurch gekennzeichnet, daß die Lichtquellenanordnung (88) außerhalb der Gehäusebaugruppe (10) angeordnet ist.

4. Aufbewahrungsbehälter nach Anspruch 3, dadurch gekennzeichnet, daß die Lichtleiter (90) in die Gehäusebaugruppe (10) eingeführt sind.

5. Aufbewahrungsbehälter nach Anspruch 3, dadurch gekennzeichnet, daß die Lichtleiter (90) um die Gehäusebaugruppe (10) bis zu Durchbrüchen (162) benachbart zu jeweils einem Einspeisungseingang für einen Halter (20) geführt sind.

6. Aufbewahrungsbehälter nach Anspruch 5, dadurch gekennzeichnet, daß die Lichtleiter (90) in das Gehäuseinnere reflektierende Abschrägungen (132) aufweisen.

7. Aufbewahrungsbehälter nach einem der Ansprüche 3 bis 6, dadurch gekennzeichnet, daß die Lichtleiter (90) eine Lichtleiterspinne, die von der Lichtquellenanordnung (88) ausgeht und von der jeweils ein Lichtleiterbein (90) pro Halter (20) vorgesehen ist, bilden.

8. Aufbewahrungsbehälter nach Anspruch 7, dadurch gekennzeichnet, daß die Beine (90) höhen- und/oder seitlich versetzt angeordnet sind.

9. Aufbewahrungsbehälter nach Anspruch 7 oder 8, dadurch gekennzeichnet, daß die Lichtleiterspinne ein Spritzgußteil ist.

10. Aufbewahrungsbehälter nach einem der Ansprüche 7 bis 9, dadurch gekennzeichnet, daß mehrere Beine (90) zusammengefaßt sind und zu Einspeisungseingängen von mehreren Haltern (20) führen.

11. Aufbewahrungsbehälter nach einem der Ansprüche 2 bis 10, dadurch gekennzeichnet, daß an jeder Seite der Gehäusebaugruppe (10) eine Lichtquelle (88) vorgesehen ist.

12. Aufbewahrungsbehälter nach einem der Ansprüche 2 bis 10, dadurch gekennzeichnet, daß die Lichtquelle (88) auf der Rückseite der Gehäusebaugruppe (10) angeordnet ist.

13. Aufbewahrungsbehälter nach Anspruch 12, dadurch gekennzeichnet, daß die Lichtleiter (90) in die Gehäusebaugruppe (10) durch deren Rückwand (16) eintreten.

14. Aufbewahrungsbehälter nach einem der Ansprüche 2 bis 13, dadurch gekennzeichnet, daß Streulichtunterdrückungsmittel vorgesehen sind.

15. Aufbewahrungsbehälter nach Anspruch 14, dadurch gekennzeichnet, daß ineinanderfahrbare Hülsen (92, 102), in denen Lichtleiter (90, 96) münden, zwischen der Gehäuseanordnung (10) und den Haltern (20) vorgesehen sind.

16. Aufbewahrungsbehälter nach Anspruch 14, dadurch gekennzeichnet, daß die Frontwände (24) der Halter (20) die Seitenwände (14) der Gehäuseanordnung frontseitig übergreifende Ansätze (166) aufweisen.

17. Aufbewahrungsbehälter nach einem der Ansprüche 2 bis 16, dadurch gekennzeichnet, daß die Lichtleiter (90) breite Austrittsenden aufweisen, von denen eine im wesentlichen punktförmige Lichtabnahme durch die Einspeisungseingänge erfolgt, oder umgekehrt.

18. Aufbewahrungsbehälter nach einem der Ansprüche 1 bis 17, dadurch gekennzeichnet, daß jeder Halter (20) eine Taste (76) zur Betätigung einer Verriegelungsanordnung für den Halter (20) in der Gehäusebaugruppe (10) aufweist, wobei die Taste (76) beleuchtbar ist.

19. Aufbewahrungsbehälter nach Anspruch 18, dadurch gekennzeichnet, daß die Lichteinspeisung direkt in die Taste (76) erfolgt.

20. Aufbewahrungsbehälter nach einem der Ansprüche 1 bis 17, dadurch gekennzeichnet, daß benachbart zur Frontwand (24) des Halters (20) ein Lichtband (168) angeordnet ist, wobei in der Frontwand (24) wenigstens ein Fenster (172) vorgesehen ist.

21. Aufbewahrungsbehälter nach einem der Ansprüche 1 bis 20, dadurch gekennzeichnet, daß er in einem Adapter (140) aufgenommen ist, der den elektrischen Anschluß (154) trägt.

22. Aufbewahrungsbehälter nach Anspruch 21, dadurch gekennzeichnet, daß zwischen der Gehäusebaugruppe (10) und dem Adapter (140) Steckkontakte (158) und zugehörige Buchsen (156) vorgesehen sind.

23. Aufbewahrungsbehälter nach einem der Ansprüche 20 bis 22, dadurch gekennzeichnet, daß eine Zwischenwand (146) vorgesehen ist, die einen Raum (150) zur Aufnahme der Lichtquelle (88) begrenzt und sich parallel und mit Abstand zu Rückwand (16) der Gehäusebaugruppe (10) erstreckt, wobei die in den Raum (150) von der Lichtquelle (88) ausgehende Lichtleiter (90) durch die Zwischenwand (146) hindurchragen.

24. Aufbewahrungsbehälter nach Anspruch 23, dadurch gekennzeichnet, daß die Zwischenwand (146) im Adapter (140) angeordnet ist.

25. Aufbewahrungsbehälter nach Anspruch 23, dadurch gekennzeichnet, daß die Zwischenwand (146) an der Gehäusebaugruppe (10) angeordnet ist.

26. Aufbewahrungsbehälter nach einem der Ansprüche 1 bis 25, dadurch gekennzeichnet, daß Dämmerungsbeleuchtungsmittel (130) vorgesehen sind, deren Strahlung auf die Front des Behälters gerichtet ist.

27. Aufbewahrungsbehälter nach Anspruch 26, dadurch gekennzeichnet, daß ein sich von der Lichtquelle (88) zur Frontseite des Behälters erstreckender Lichtleiter (130) vorgesehen ist.

28. Aufbewahrungsbehälter nach einem der Ansprüche 2 bis 27, dadurch gekennzeichnet, daß sich ein Lichtleiter (96, 106) abgedeckt durch den Halter (20) bis zu dessen Frontwandbereich erstreckt.

29. Aufbewahrungsbehälter nach einem der Ansprüche 1 bis 28, dadurch gekennzeichnet, daß die von außen sichtbare Beleuchtung (106) jedes Halters (20) Anzeigefenster (104) als Anzeige für das Belegtoder Nichtbelegtsein des jeweiligen Halters (20) aufweist, wobei zugehörige Umschaltmittel (108, 110, 114) vorgesehen sind, die durch Entnehmen oder Einlegen eines Aufzeichnungsträgers (22) in einen Halter (20) betätigbar sind.

30. Aufbewahrungsbehälter nach Anspruch 29, dadurch gekennzeichnet, daß durch die Umschaltmittel (108, 110, 114) eine Farbumschaltung vornehmbar ist.

31. Aufbewahrungsbehälter nach Anspruch 29, dadurch gekennzeichnet, daß durch die Umschaltmittel (108, 110, 114) eine Ein-/Ausschaltung vornehmbar ist.

32. Aufbewahrungsbehälter nach einem der Ansprüche 29 bis 31, dadurch gekennzeichnet, daß die Umschaltmittel (108, 110, 114) Lichtmodulationsmittel (108) umfassen.

33. Aufbewahrungsbehälter nach Anspruch 32, dadurch gekennzeichnet, daß die Lichtmodulationsmittel (108) zwei transparente Felder aufweisen, von denen wenigstens eines farbig ist.

34. Aufbewahrungsbehälter nach Anspruch 33, dadurch gekennzeichnet, daß die beiden Felder quer zur Lichtstromrichtung benachbart angeordnet und abwechselnd entsprechend dem Vorhandensein bzw. Nichtvorhandensein des Aufzeichnungsträgers (22) in den Lichtweg zum Anzeigefenster (104) bringbar sind.

35. Aufbewahrungsbehälter nach Anspruch 33, dadurch gekennzeichnet, daß die beiden Felder in Lichtstromrichtung hintereinander angeordnet sind, wobei wenigstens ein Feld durch Einlegen eines Aufzeichnungsträgers (22) in den Lichtweg bringbar ist.

36. Aufbewahrungsbehälter nach Anspruch 32, dadurch gekennzeichnet, daß die Modulationsmittel (108) eine in den Lichtweg zum Anzeigefenster (104) bringbare Blende umfassen.

37. Aufbewahrungsbehälter nach Anspruch 36, dadurch gekennzeichnet, daß der Aufzeichnungsträger (22) als Blende dient, indem der Lichtweg von der Lichtquelle zum Anzeigefenster (104) durch den Aufnahmebereich des Aufzeichnungsträgers (22) im Halter (20) führt.

**38.** Aufbewahrungsbehälter nach einem der Ansprüche 29 bis 37, dadurch gekennzeichnet, daß ein Tastorgan (114) im Aufnahmebereich des Halters (20) für den Aufzeichnungsträger (22) vorgesehen ist.

**39.** Aufbewahrungsbehälter nach einem der Ansprüche 29 bis 37, dadurch gekennzeichnet, daß das Gehäuse (10) Tastorgane (114), die in die Aufnahmebereiche der Aufzeichnungsträger (22) auf den Haltern (20) ragen, aufweist.

**40.** Aufbewahrungsbehälter nach einem der Ansprüche 29 bis 39, dadurch gekennzeichnet, daß das Umschaltmittel (108, 110, 114) im Halter (20) angeordnet ist.

**41.** Aufbewahrungsbehälter nach einem der Ansprüche 32 bis 40, dadurch gekennzeichnet, daß das Modulationsmittel (108) zwischen Lichtleiterabschnitte (90, 106) schwenkbar ist.

**42.** Aufbewahrungsbehälter nach einem der Ansprüche 29 bis 41, dadurch gekennzeichnet, daß die Umschaltmittel (108, 110, 114) einen Schwenkhebel (110) umfassen, der in eine erste Endstellung federvorgespannt ist.

**43.** Aufbewahrungsbehälter nach Anspruch 42, dadurch gekennzeichnet, daß der Schwenkhebel (110) eine toleranzausgleichende Lagerung (122) besitzt.

**44.** Aufbewahrungsbehälter nach Anspruch 43, dadurch gekennzeichnet, daß die Lagerung (122) offene Lagerschalen aufweist und ein Anschlag (120) vorgesehen ist, der eine zweite Endstellung definierend bereits nach einer Teilschwenkung des Schwenkhebels (110) erreicht wird.

**45.** Aufbewahrungsbehälter nach einem der Ansprüche 29 bis 44, dadurch gekennzeichnet, daß benachbart zu dem Anzeigefenster (104) die Betätigungstaste (76) zum Bringen des Halters (20) in die Entnahmeposition für den Aufzeichnungsträger (22) vorgesehen ist.

**46.** Aufbewahrungsbehälter nach einem der Ansprüche 2 bis 45, dadurch gekennzeichnet, daß der Halter (20) eine damit gelenkig verbundene frontseitige Klappe (60) aufweist, wobei für beide Teile jeweils ein Lichtleiter (96, 106) vorgesehen ist, die bei fluchtenden Teilen (20, 60) stirnseitig gekoppelt sind.

**47.** Aufbewahrungsbehälter nach einem der Ansprüche 29 bis 46, dadurch gekennzeichnet, daß die Umschaltmittel (108, 110, 114) ein Betätigungsmittel (110) im gehäuseinnenseitigen Bereich des Halters (20) aufweisen, das durch den Druck einer benachbarten Endkante des eingelegten Aufzeichnungsträgers (22) auslenkbar ist.

**48.** Aufbewahrungsbehälter nach einem der Ansprüche 2 bis 47, dadurch gekennzeichnet, daß die Lichtleiter (90, 96, 106, 130) faseroptische Lichtleiter sind.

**49.** Aufbewahrungsbehälter nach Anspruch 1, dadurch gekennzeichnet, daß die Gehäusebaugruppe (10) selbst den elektrischen Anschluß (154) an das Kraftfahrzeug-Bordnetz aufweist.

**Claims**

1. Storage container for recording media (22) for installation in motor vehicles, comprising a housing assembly (10) having a plurality of holders (20) for at least one recording medium (22), by means of which the recording media (22) can be transported out of the housing assembly (10) into a convenient position for removal and each of which has a front wall (24) to cover the storage spaces of the housing assembly (10), as well as an electrical connection (154) to the inboard electrical supply system of the vehicle to feed a light source arrangement (88), by means of which at least a part region of the front of the container can be illuminated so that it is visible from outside, characterised in that in the housing assembly (10) for each holder (20) a light guide (90) is so arranged that its light feed outlet is situated opposite the light feed inlet of a corresponding light guide (96) in the holder (20) and there is a light transmission connection between both light guides (90,96) when the holder is pushed into the housing assembly.

2. Storage container according to Claim 1, characterised in that a light source (88) for more than one holder (20) is provided, from which light guides (90,96) lead to the feed-in inputs of the holders (20).

3. Storage container according to Claim 1 or 2, characterised in that the light source arrangement (88) is arranged outside the housing assembly (10).

4. Storage container according to Claim 3, characterised in that the light guides (90) are led into the housing assembly (10).

5. Storage container according to Claim 3, characterised in that the light guides (90) are led round the housing assembly (10) to apertures (162) each of which is adjacent to a feed-in input for a holder (20).

6. Storage container according to Claim 5, characterised in that the light guides (90) have bevelled surfaces (132) reflecting into the inside of the housing.

7. Storage container according to one of Claims 3 to 6, characterised in that the light guides (90) form a light guide spider which starts from the light source arrangement (88) and a light guide leg (90) of which is provided for each holder (20).

8. Storage container according to Claim 7, characterised in that the legs (90) are arranged so that they are offset vertically and/or laterally.

9. Storage container according to Claim 7 or 8, characterised in that the light guide spider is an injection-moulded part.

10. Storage container according to one of Claims 7 to 9, characterised in that a plurality of legs (90) are brought together and lead to feed-in inputs of a plurality of holders (20).

11. Storage container according to one of Claims 2 to 10, characterised in that a light source (88) is provided on each side of the housing assembly (10).

12. Storage container according to one of Claims 2 to 10, characterised in that the light source (88) is arranged on the rear side of the housing assembly (10).

13. Storage container according to Claim 12, characterised in that the light guides (90) enter the housing assembly (10) through the rear wall (16) of the latter.

14. Storage container according to one of Claims 2 to 13, characterised in that means for suppressing scattered light are provided.

15. Storage container according to Claim 14, characterised in that telescopic sleeves (92,102) into which light guides (90,96) open are provided between the housing arrangement (10) and the holders (20).

16. Storage container according to Claim 14, characterised in that the front walls (24) of the holders (20) have extensions (166) engaging at the front over the side walls (14) of the housing arrangement.

17. Storage container according to one of Claims 2 to 16, characterised in that the light guides (90) have wide outlet ends, from which a substantially point-like light pick-up is effected by means of the feed-in inputs, or vice versa.

18. Storage container according to one of Claims 1 to 17, characterised in that each holder (20) has a button (76) to actuate an arrangement for locking the holder (20) in the housing assembly (10), the button (76) being arranged to be illuminated.

19. Storage container according to Claim 18, characterised in that the light is fed directly into the button (76).

20. Storage container according to one of Claims 1 to 17, characterised in that a light band (168) is arranged adjacent to the front wall (24) of the holder (20), at least one window (172) being provided in the front wall (24).

21. Storage container according to one of Claims 1 to 20, characterised in that it is accommodated in an adaptor (140) which carries the electrical connection (154).

22. Storage container according to Claim 21, characterised in that plug-in contacts (158) and corresponding sockets (156) are provided between the housing assembly (10) and the adaptor (140).

23. Storage container according to one of Claims 20 to 22, characterised in that an intermediate wall (146) is provided which defines a space (150) to receive the light source (88) and extends parallel to and at a distance from the rear wall (16) of the housing assembly (10), the light guides (90) emerging from the light source (88) into the space (150) projecting through the intermediate wall (146).

**24.** Storage container according to Claim 23, characterised in that the intermediate wall (146) is arranged in the adaptor (140).

**25.** Storage container according to Claim 23, characterised in that the intermediate wall (146) is arranged on the housing assembly (10).

**26.** Storage container according to one of Claims 1 to 25, characterised in that low-level lighting means (130) are provided, the radiation of which is directed towards the front of the container.

**27.** Storage container according to Claim 26, characterised in that a light guide (130) extending from the light source (88) to the front side of the container is provided.

**28.** Storage container according to one of Claims 2 to 27, characterised in that a light guide (96,106), covered over by the holder (20), extends to the front wall region of the latter.

**29.** Storage container according to one of Claims 1 to 28, characterised in that the illumination (106), visible from the outside, of each holder (20) has indicator windows (104) to indicate whether the respective holder (20) is occupied or not, corresponding switchover means (108,110,114) being provided which can be actuated by the removal or insertion of a recording medium (22) from or into a holder (20).

**30.** Storage container according to Claim 29, characterised in that a colour change is arranged to be brought about by the switchover means (108,110,114).

**31.** Storage container according to Claim 29, characterised in that a switching-in or switching-out operation is arranged to be brought about by the switchover means (108,110,114).

**32.** Storage container according to one of Claims 29 to to 31, characterised in that the switchover means (108,110,114) comprise light modulating means (108).

**33.** Storage container according to Claim 32, characterised in that the light modulation means (108) have two transparent fields, at least one of which is coloured.

**34.** Storage container according to Claim 33, characterised in that the two fields are arranged transversely to the direction of travel of the light so that they are adjacent and can be brought alternately into the light path to the indicator window (104), depending on the presence or absence of the recording medium (22).

**35.** Storage container according to Claim 33, characterised in that the two fields are arranged one behind the other in the direction of travel of the light, at least one field being arranged to be brought into the light path by the insertion of a recording medium (22).

**36.** Storage container according to Claim 32, characterised in that the modulation means (108) comprise a light-stop which can be brought into the light path to the indicator window (104).

**37.** Storage container according to Claim 36, characterised in that the recording medium (22) serves as a light-stop, in that the light path from the light source to the indicator window (104) leads through the region receiving the recording medium (22) in the holder (20).

**38.** Storage container according to one of Claims 29 to 37, characterised in that a feeler (114) is provided for the recording medium (22) in the receiving region of the holder (20).

**39.** Storage container according to one of Claims 29 to 37, characterised in that the housing (10) has feelers (114) which project into the receiving regions for the recording media (22) on the holders (20).

**40.** Storage container according to one of Claims 29 to 39, characterised in that the switchover means (108,110,114) is arranged in the holder (20).

**41.** Storage container according to one of Claims 32 to 40, characterised in that the modulation means (108) is pivotable between light guide sections (90,106).

**42.** Storage container according to one of Claims 29 to 41, characterised in that the switchover means (108,110,114) comprise a pivoted lever (110) which is biased by springs into a first end position.

**43.** Storage container according to Claim 42, characterised in that the pivoted lever (110) has a bearing means (122) compensating for tolerances.

**44.** Storage container according to Claim 43, characterised in that the bearing means (122) has open bearing shells, and a stop member (120) is provided which, defining a second end position, is reached after partial pivoting of the pivoted lever (110).

**45.** Storage container according to one of Claims 29 to 44, characterised in that adjacent to the indicator window (104) the actuating button (76) is provided to bring the holder (20) into the position for removal of the recording medium (22).

**46.** Storage container according to one of Claims 2 to 45, characterised in that the holder (20) has a front flap (60) hinged onto it, wherein a respective light guide (96,106) is provided for each of the two parts and the light guides are coupled at their end faces when the parts (20,60) are flush.

**47.** Storage container according to one of Claims 29 to 46, characterised in that the switchover means (108,110,114) have an actuating means (110) in the region of the holder (20) located inside the housing and which can be displaced by the pressure of an adjacent end edge of the inserted recording medium (22).

**48.** Storage container according to one of Claims 2 to 47, characterised in that the light guides (90,96,106,130) are fibre-optic light guides.

**49.** Storage container according to Claim 1, characterised in that the housing assembly (10) itself has the electrical connection (154) to the inboard electrical supply system of the vehicle.

**Revendications**

**1.** Boîtier d'emmagasinage pour supports (22) d'enregistrement à monter dans des véhicules automobiles, comportant un ensemble (10) de boîtier comportant plusièurs logements (20) destinés au moins à un support (22) d'enregistrement au moyen duquel les supports (22) d'enregistrement peuvent être transportés hors de l'ensemble (10) de boîtier dans une position commode de prélèvement et qui présentent chacun une paroi frontale (24) pour recouvrir les espaces d'emmagasinage de l'ensemble (10) de boîtier, ainsi qu'un raccordement électrique (154) au réseau de bord du véhicule pour alimenter un dispositif (88) de source lumineuse au moyen duquel au moins une zone partielle de la façade du boîtier peut être éclairée d'une façon visible de l'extérieur caractérisé en ce qu'un conducteur lumineux (90) est disposé dans l'ensemble (10) pour chaque logement (20) d'une manière telle que sa sortie d'alimentation lumineuse est disposée face à une entrée d'alimentation lumineuse d'un conducteur lumineux correspondant (96) du logement (20) et en ce qu'une liaison de transfert de lumière est réalisée entre les deux conducteurs lumineux (90, 96) lorsque le logement est inséré dans l'ensemble.

**2.** Boîtier d'emmagasinage selon la revendication 1, caractérisé en ce qu'il est prévu, pour plus d'un support (20), une source lumineuse (88) à partir de laquelle des conducteurs lumineux (90, 96) mènent aux entrées d'alimentation des logements (20).

**3.** Boîtier d'emmagasinage selon l'une des revendications 1 à 2, caractérisé en de que le dispositif (88) de source lumineuse est disposé à l'extérieur de l'ensemble (10) de boîtier.

**4.** Boîtier d'emmagasinage selon la revendication 3, caractérisé en ce que les conducteurs lumineux (90) sont amenés dans l'ensemble (10) de boîtier.

**5.** Boîtier d'emmagasinage selon la revendication 3, caractérisé en ce que les conducteurs lumineux (90) sont amenés autour de l'ensemble (10) de boîtier jusqu'à des orifices (162) au voisinage de l'entrée d'alimentation de chaque logement (20).

**6.** Boîtier d'emmagasinage selon le revendication 5, caractérisé an ce que les conducteurs lumineux (90) comportent des parties obliques réfléchissantes (132) à l'intérieur du boîtier.

**7.** Boîtier d'emmagasinage selon les revendications 3 à 6, caractérisé en ce que les conducteurs lumineux (90) constituent une tresse de conducteurs lumineux qui sort du dispositif (88) de source lumineuse et parmi lesquels est prévue une branche (90) de conducteur lumineux pour chaque logement (20).

**8.** Boîtier d'emmagasinage selon la revendication 7, caractérisé en ce que les branches (90) sont disposées en étant décalées en hauteur et/ou latéralement.

9. Boîtier d'emmagasinage selon la revendication 7 ou 8, caractérisé en ce que la tresse de conducteurs lumineux est un élément moulé par injection.

10. Boîtier d'emmagasinage selon l'une des revendications 7 à 9, caractérisé en ce que plusieurs branches (90) sont rassemblées et mènent vers les entrées d'alimentation de plusieurs logements (20).

11. Boîtier d'emmagasinage selon l'une des revendications 2 à 10, caractérisé en ce qu'il est prévu sur chaque côté de l'ensemble (10) de boîtier une source lumineuse (88).

12. Boîtier d'emmagasinage selon l'une des revendications 2 à 10, caractérisé en ce que la source lumineuse (88) est disposée sur le côté arrière de l'ensemble (10) de boîtier.

13. Boîtier d'emmagasinage selon la revendication 12, caractérisé en ce que les conducteurs lumineux (90) entrent dans l'ensemble (10) de boîtier par sa paroi arrière (16).

14. Boîtier d'emmagasinage selon l'une des revendications 2 à 13, caractérisé en ce qu'il est prévu dus moyens d'élimination de lumière diffuse.

15. Boîtier d'emmagasinage selon la revendication 14, caractérisé en ce qu'il est prévu, entre le dispositif (10) de boîtier et les logements (20), des douilles (92, 102) susceptibles de s'interpénétrer, dans lesquelles débouchent les conducteurs lumineux (90, 96).

16. Boîtier d'emmagasinage selon la revendication 14, caractérisé en ce que les parois frontales (24) des logements (20) présentent des appendices (166) qui saisissent frontalement par le dessus des parois latérales (14) du dispositif de boîtier.

17. Boîtier d'emmagasinage selon l'une des revendications 2 à 16, caractérisé en ce que les conducteurs lumineux (90) présentent de larges extrémités de sortie à partir desquelles est réalisé un prélèvement de sortie sensiblement ponctuel au moyen des entrées d'alimentation, ou vice-versa.

18. Boîtier d'emmagasinage selon l'une des revendications 1 à 17, caractérisé en ce que chaque logement (20) porte une touche (76) pour l'actionnement d'un dispositif de verrouillage du logement (20) dans l'ensemble (10) de boîtier, la touche (76) pouvant être éclairée.

19. Boîtier d'emmagasinage selon la revendication 18, caractérisé en ce que l'alimentation lumineuse est réalisée directement dans la touche (76).

20. Boîtier d'emmagasinage selon l'une des revendications 1 à 17, caractérisé en ce qu'il est disposé au voisinage de la paroi frontale (24) du logement (20) une bande lumineuse (168), au moins une fenêtre (172) étant prévue dans la paroi frontale (24).

21. Boîtier d'emmagasinage selon l'une des revendications 1 à 20, caractérisé en ce qu'il est reçu dans un adaptateur (140) qui porte le raccordement électrique (154).

22. Boîtier d'emmagasinage selon la revendication 21, caractérisé en ce qu'il est prévu entre l'ensemble (10) de boîtier et l'adaptateur (140) des contacts par enfoncement (158) et des douilles associées (156).

23. Boîtier d'emmagasinage selon l'une des revendications 20 à 22, caractérisé en ce qu'il est prévu une paroi intermédiaire (146) qui limite un espace (150) de réception de la source lumineuse (88) et qui s'étend parallèlement à la paroi arrière (16) de l'ensemble (10) de boîtier et à distance de celle-ci, les conducteurs lumineux (90) qui sortent de la source lumineuse (88) dans l'espace (150) faisant, saillie à travers la paroi intermédiaire (146).

24. Boîtier d'emmagasinage selon la revendication 23, caractérisé en ce que la paroi intermédiaire (146) est disposée dans l'adaptateur (140).

25. Boîtier d'emmagasinage selon la revendication 23, caractérisé en ce que la paroi intermédiaire (146) est disposée sur l'ensemble (10) de boîtier.

26. Boîtier d'emmagasinage selon l'une des revendications 1 à 25, caractérisé en ce que sont prévus des moyens lumineux à variateur (130) dont le rayonnement est dirigé vers la façade du boîtier.

27. Boîtier d'emmagasinage selon la revendication 26, caractérisé en ce qu'il est prévu un conducteur lumineux (130) s'étendant depuis la source lumineuse (88) vers le côté frontal du boîtier.

**28.** Boîtier d'emmagasinage selon l'une des revendications 2 à 27, caractérisé en ce qu'un conducteur lumineux (96, 106) s'étend sous recouvrement à travers le logement (20) jusqu'à la zone de la paroi frontale de celui-ci.

**29.** Boîtier d'emmagasinage selon l'une des revendications 1 à 28, caractérisé en ce que l'éclairage (106) visible de l'extérieur de chaque logement (20) présente des fenêtres d'affichage (104) en tant qu'affichage de l'état rempli ou non rempli du logement (20) correspondant, et des moyens commutateurs associés (108, 110, 114) qui peuvent être actionnés par prélèvement ou insertion d'un support (22) d'enregistrement dans le logement (20) étant prévus.

**30.** Boîtier d'emmagasinage selon la revendication 29, caractérisé en ce qu'une commutation de couleur peut être réalisée par les moyens commutateurs (108, 110, 114).

**31.** Boîtier d'emmagasinage selon la revendication 29, caractérisé en ce qu'une mise en fonction ou hors fonction peut être réalisée à l'aide des moyens commutateurs (108, 110, 114).

**32.** Boîtier d'emmagasinage selon l'une des revendications 29 à 31, caractérisé en ce que les moyens commutateurs (108, 110, 114) contiennent des moyens (108) de modulation de lumière.

**33.** Boîtier d'emmagasinage selon la revendication 32, caractérisé en ce que les moyens (108) de modulation de lumière comportent deux champs transparents, dont l'un au moins est coloré.

**34.** Boîtier d'emmagasinage selon la revendication 33, caractérisé en ce que les deux champs sont disposés proches l'un de l'autre transversalement à la direction du flux lumineux et peuvent être amenés en alternance dans le trajet lumineux vers la fenêtre d'affichage (104) en fonction de la présence ou de l'absence du support (22) d'enregistrement.

**35.** Boîtier d'emmagasinage selon la revendication 33, caractérisé en ce que les deux champs sont disposés l'un derrière l'autre dans la direction du flux lumineux, au moins un champs pouvant être amené dans le trajet lumineux par l'insertion d'un support (22) d'enregistrement.

**36.** Boîtier d'emmagasinage selon la revendication 32, caractérisé en ce que les moyens (108) de modulation comportent un volet qui peut être amené dans le trajet lumineux allant vers la fenêtre d'affichage (104).

**37.** Boîtier d'emmagasinage selon la revendication 36, caractérisé en ce que le support (22) d'enregistrement sert de volet, le trajet lumineux passant depuis la source lumineuse vers la fenêtre d'affichage (104) à travers la zone de réception du support (22) d'enregistrement dans le logement (20).

**38.** Boîtier d'emmagasinage selon l'une des revendications 29 à 37, caractérisé en ce qu'il est prévu, pour le support (22) d'enregistrement, un élément palpeur (114) dans la zone de réception du logement (20).

**39.** Boîtier d'emmagasinage selon l'une des revendications 29 à 37, caractérisé en ce que le boîtier (10) comporte des éléments palpeurs (114) qui font saillie dans les zones de réception des supports (22) d'enregistrement sur les logements (20).

**40.** Boîtier d'emmagasinage selon l'une des revendications 29 à 39, caractérisé en ce que le moyen commutateur (108, 110, 114) est disposé dans le logement (20).

**41.** Boîtier d'emmagasinage selon l'une des revendications 32 à 40, caractérisé en ce que le moyen (108) de modulation peut pivoter entre des parties (90, 106) de conducteurs lumineux.

**42.** Boîtier d'emmagasinage selon l'une des revendications 29 à 41, caractérisé en ce que les moyens commutateurs (108, 110, 114) comportent un levier pivotant (110) qui est sollicité de manière élastique dans une première position de fin de course.

**43.** Boîtier d'emmagasinage selon la revendication 42, caractérisé en ce que le levier pivotant (110) possède un logement (122) à compensation de tolérance.

**44.** Boîtier d'emmagasinage selon la revendication 43, caractérisé en ce que le logement (122) comporte des enveloppes ouvertes de logement et en ce qu'il est prévu une butée (120) qui est déjà atteinte, en définissant une deuxième position de fin de course, après un pivotement partiel du levier de pivotement (110).

14

**45.** Boîtier d'emmagasinage selon l'une des revendications 29 à 44, caractérisé en ce que la touche d'actionnement (76) destinée à amener le logement (20) dans la position de prélèvement des supports (22) d'enregistrement est prévue au voisinage de la fenêtre d'affichage (104).

**46.** Boîtier d'emmagasinage selon l'une des revendications 2 à 45, caractérisé en ce que le support (20) comporte un volet frontal (60) qui lui est relié de façon articulée, un conducteur lumineux (96, 106) étant prévu pour chacun des deux éléments (20, 60) qui sont accouplés face-à-face lorsqu'ils sont alignés.

**47.** Boîtier d'emmagasinage selon l'une des revendications 29 à 46, caractérisé en ce que les moyens commutateurs (108, 110, 114) comportent, dans la zone latérale intérieure du boîtier du logement (20), un moyen d'actionnement (110) qui peut être écarté vers l'extérieur par la pression d'une arête d'extrémité du support (22) d'enregistrement inséré qui en est voisine.

**48.** Boîtier d'emmagasinage selon l'une des revendications 2 à 47, caractérisé en ce que les conducteurs lumineux (90, 96, 106, 130) sont des conducteurs lumineux à fibres optiques.

**49.** Boîtier d'emmagasinage selon la revendication 1, caractérisé en ce que l'ensemble (10) de boîtier comporte lui-même le raccord électrique (154) au réseau de bord du véhicule.

Fig. 1

EP 0 230 558 B1

**Fig. 2**

**Fig. 3**

Fig. 4

Fig. 5

EP 0 230 558 B1

*Fig. 6*

*Fig. 7*

*Fig. 10*

*Fig. 9*

*Fig. 8*

**Fig. 12**

**Fig. 13**

**Fig. 11**

EP 0 230 558 B1

Fig. 14·a

EP 0 230 558 B1

EP 0 230 558 B1

Fig. 14·b

*Fig. 15*

*Fig. 16*

Fig. 17

Fig. 18

Fig. 19  Fig. 20

Fig. 21

EP 0 230 558 B1

Fig: 24

Fig: 23

Fig: 22

*Fig. 26*

*Fig. 25*

*Fig. 28*

*Fig. 27*